# EUROPÄISCHE PATENTSCHRIFT

(11) **EP 0 735 785 B1**
(45) Veröffentlichungstag und Bekanntmachung des Hinweises auf die Patenterteilung: **03.07.2002**
(21) Anmeldenummer: 96104092.0
(22) Anmeldetag: 15.03.1996
(51) Int. Cl.: H04Q 3/545, H04Q 11/04, H04M 3/42, H04Q 3/62

(54) **Kommunikationssystem mit vermittlungstechnischen Servern**
Communication system with switched servers
Système de communication avec des serveurs commutés

(30) Priorität: 27.03.1995 CH 86195
(43) Veröffentlichungstag der Anmeldung: 02.10.1996
(73) Patentinhaber: Siemens Schweiz AG, 8047 Zürich (CH)
(72) Erfinder: Keller, Matthias, 8603 Schwerzenbach (CH); Krebs, Urs, 8905 Arni (CH); Abeln, Thomas, 8032 Zürich (CH); Liehta, Peter, 5525 Fischbach (CH); Rippstein, Eugen, 8904 Aesch (CH)
(74) Vertreter: Berg, Peter

(56) Entgegenhaltungen:
- EP-A- 0 125 602
- EP-A- 0 197 304
- EP-A- 0 380 951
- EP-A- 0 398 183
- EP-A- 0 576 671
- WO-A-92/17013
- DE-A- 3 609 889

## Beschreibung

Die vorliegende Erfindung betrifft ein Kommunikationssystem nach dem Oberbegriff des Patentanspruchs 1.

Für den Kommunikationsdienst "Sprache" existieren Kommunikationsnetze mit Kommunikationssystemen als Netzknoten. Ihre Aufgabe besteht im Zustandebringen von Verbindungen zwischen den an die Kommunikationssysteme angeschlossenen Teilnehmern. Dabei kann man öffentliche Kommunikationsnetze von sogenannten lokalen Netzen unterscheiden, die vorwiegend innerhalb von Unternehmen installiert sind. An die in den Knotenpunkten der lokalen Netze gelegenen, oft auch als Nebenstellenanlagen bezeichneten Kommunikationssysteme können bis zu mehrere tausend Teilnehmer angeschlossen werden. Eine Schnittstelle zu den öffentlichen Kommunikationsnetzen erlaubt darüber hinaus die Kommunikation mit externen Partnern.

Solange die Kommunikation auf die Kommunikationsform "Sprache" beschränkt ist, reichen analoge Kommunikationsnetze und -systeme für die zugehörigen Grundfunktionen aus. Die heutige Bürokommunikation umfasst aber weitere Kommunikationsformen, die mit solchen analogen Systemen nicht oder nur unzureichend realisiert werden können. Dabei handelt es sich um die Kommunikationsformen "Bild", "Daten" und "Text", zu deren Übertragung und Verarbeitung Verfahren auf digitaler Basis verwendet werden. In der Praxis entstanden so zuweilen digitale Kommunikationsnetze, die parallel zu den bisher existierenden analogen Kommunikationsnetzen erstellt wurden. Dies verursachte zwangsläufig eine gewisse Komplexität und Unübersichtlichkeit, da im allgemeinen jedem Teilnehmer für die unterschiedlichen Kommunikationsdienste verschiedene Teilnehmemummern zugeordnet werden mussten. Dies war einer der Gründe dafür, die parallel existierenden verschiedenartigen Netze in ein einheitliches Kommunikationsnetz zu integrieren.

In öffentlichen Kommunikationsnetzen ist die Realisierung dieser auf ISDN (Integrated Service Digital Network) basierenden Konzepte noch im Umbruch begriffen, während die Integration der Dienste im Büro schon weit fortgeschritten ist. Aus der Druckschrift "ISDN im Büro", erschienen im Dezember 1985 als Sonderausgabe zu den monatlichen Publikationen "Telecom Report" und "Siemens-Magazin COM" der Firma Siemens, sind digitale Kommunikationssysteme bekannt, die eine flexible Anpassung an moderne Organisationsformen erlauben. Dies geschieht unter anderem durch die Integration von sogenannten Servern, d.h. Hardware-Modulen, die mittels Systemprozeduren spezielle Services - Leistungsmerkmale im Kommunikationssystem - bereitstellen.

In bestimmten Anwendungsgebieten für Bürokommunikation werden spezielle, nicht allgemein übliche Leistungsmerkmale benötigt; ein solches Anwendungsgebiet ist beispielsweise der internationale Handel mit Aktien, Devisen, Rohstoffen, der nicht nur eine weltweite Kommunikation zur Entscheidungsfindung, sondern auch ein unmittelbares, aktives Eingreifen in das Marktgeschehen notwendig macht. Von grosser Bedeutung ist dabei, dass die benötigten Verbindungen schnell und mit hoher Zuverlässigkeit erstellt werden können. Sonderanlagen für solche Zwecke sind oft als selbständiges System oder als Zweitstellennebenanlage hinter eine Hauptanlage geschaltet.

Die in der oben erwähnten Druckschrift erläuterten digitalen Kommunikationssysteme sind nun nicht speziell für solche Anwendungen konzipiert; so ist beispielsweise für einen Devisenhändler, der innerhalb von Sekunden auf eine sich verändernde Marktlage reagieren muss, nicht nur das ständige Beobachten des Marktes, sondern auch ein aktives Eingreifen in das Marktgeschehen unerlässlich. Entsprechende Leistungsmerkmale hierzu werden von bekannten digitalen Kommunikationssystemen nur in beschränktem Umfang, von bekannten analogen Kommunikationssystemen nur mit verhältnismässig hohem Aufwand, z.B. durch die Zuschaltung einer Zweitnebenstellenanlage zur analogen Hauptanlage, bereitgestellt. Von besonderer Bedeutung ist dabei oft auch die schnelle Erreichbarkeit eines beliebigen Mitgliedes eines Devisenhändlerteams, so z.B. zur Abwicklung eines Standardauftrages, sowie die Möglichkeit zur Bildung von Konferenzgesprächen.

In der EP 0 197 304 A1 und in der DE 36 09 889 A1 sind Konzentratoren offenbart, die zur kostengünstigen Versorgung insbesondere abgelegener Dörfer und Weiler mit einer eher geringen Zahl von Anschlusseinheiten vorgesehen sind. Solche Konzentratoren sind an eine übergeordnete öffentliche Vermittlungsstelle angeschlossen.

Der in der DE 36 09 889 A1 (Siemens AG) offenbarte Konzentrator weist eine vermittlungstechnische Intelligenz auf, indem bei Unterbrechung der Verbindung zur Vermittlungsstelle oder bei Ausfall der Vermittlungsstelle ein sogenannter Inselamts-Notvermittlungsbetrieb möglich ist, so wäre z.B. eine Alarmierung der lokalen Feuerwehr immer noch möglich.

In der Schrift EP 0 197 304 A1 (Siemens AG) wird für einen über zwei Kanalsysteme mit einer übergeordneten Vermittlungsstelle verbundenen Konzentrator eine Schaltungsanordnung vorgeschlagen, die eine ausgeglichene Lastverteilung auf den beiden Kanalsystemen erlaubt.

Aus der WO 92/17013 (Siemens AG) ist ein Kommunikationssystem bekannt, das eine Bürokommunikation auf digitaler Basis mit Bereitstellung entsprechender Leistungsmerkmale für Maklerzwecke ermöglicht. Dabei ist jeweils zumindest ein Mitglied des Händlerteams schnell erreichbar. Ferner sollen mehrere Teammitglieder gleichzeitig auf einen internen oder externen Anruf eintreten können.

Wesentlich ist dabei die Erweiterung des digitalen Kommunikationssystems durch vermittlungstechnische Server. Sie werden als sogenannte Servermodule in der Peripherie des Kommunikationssystems anstelle eines oder mehrerer üblicher digitaler Schnittstellenmodule installiert. Damit steht dem Anwender der volle Leistungsumfang des digitalen Kommunikationssystems verbunden mit den zusätzlichen Leistungsmerkmalen der vermittlungstechnischen Server zur Verfügung. Insbesondere die Verlagerung der vermittlungstechnischen Server in die Peripherie des Kommunikationssystems bietet erhebliche Vorteile, wie z.B. die Möglichkeit, bei Bedarf flexibel neue Leistungsmerkmale bereitzustellen, ohne dabei in zentralen Teilen des Kommunikationssystems umfangreiche Eingriffe vornehmen und damit eventuell das gesamte System abschalten zu müssen. Zum anderen ist die Verwendung der vermittlungstechnischen Server anstelle anderer Schnittstellenmodule mit einer drastischen Reduktion des Verkabelungsaufwandes und damit einer Minimierung der Fehlerwahrscheinlichkeit verbunden. Durch eine besondere Vernetzung der vorhandenen vermittlungstechnischen Server wird dabei ermöglicht, dass ein externer Anrufer gleichzeitig mehrere Mitglieder des Händlerteams rufen kann (Leistungsmerkmal "Parallelruf"). Dadurch ergibt sich eine minimale Wartezeit für den Anrufer, bis eines der Teammitglieder auf den Anruf eintritt. Falls z.B. fünf Mitglieder des Händlerteams Warentermingeschäfte abwickeln und ein Kunde einen diesbezüglichen Auftrag raschmöglichst aufgeben möchte, kann er die den fünf Teammitgliedern zugeordnete Rufnummer wählen und wird mit dem ersten Mitglied verbunden, das auf den Anruf eintritt. Ferner kann auch vorgesehen werden, dass nicht nur ein, sondern mehrere Teammitglieder in ein Konferenzgespräch mit dem Anrufer eintreten können. Zur Realisierung dieses Leistungsmerkmals können die funktionell gleichwirkenden vermittlungstechnischen Server, die je zumindest eine Durchschalteeinheit aufweisen, direkt oder über einen zusätzlichen zentralen vermittlungstechnischen Server miteinander verbunden werden. Die Verwendung eines zentralen vermittiungstechnischen Servers hat dabei den Vorteil, dass die Kapazität der in den vermittlungstechnischen Servern verwendeten Durchschalteeinheiten SWU relativ klein gehalten werden kann.

Nachteilig bei diesem Kommunikationssystem ist, dass bei einer Überlastung der verwendeten Vermittlungszentrale oder bei einem Ausfall eines Servers die entsprechenden Endgeräte nicht mehr funktionsfähig sind.

Der vorliegenden Erfindung liegt daher die Aufgabe zugrunde, ein Kommunikationssystem anzugeben, das eine erhöhte Verfügbarkeit aufweist. Femer sollen durch das erfindungsgemässe Kommunikationssystem der schnelle Aufbau von kostengünstigeren Verbindungen ermöglicht werden.

Die Lösung der Aufgabe gelingt durch die im Patentanspruch 1 angegebenen Massnahmen. Vorteilhafte Ausgestaltungen der Erfindung sind in weiteren Ansprüchen angegeben.

Das erfindungsgemässe Kommunikationssystem ermöglicht einen schnellen Aufbau von Verbindungen zwischen einzelnen Teilnehmern und dies normalerweise auch dann, wenn einzelne Teile des Kommunikationssystems überlastet oder aufgrund technischer Defekte ausgefallen sind. Mit dem erfindungsgemässen Kommunikationssystem können ferner die Kosten für die Verbindungen durch die Auswahl günstiger Übertragungswege reduziert werden.

Das erfindungsgemässe Kommunikationssystem wird nachfolgend anhand einer Zeichnung beispielsweise näher erläutert.

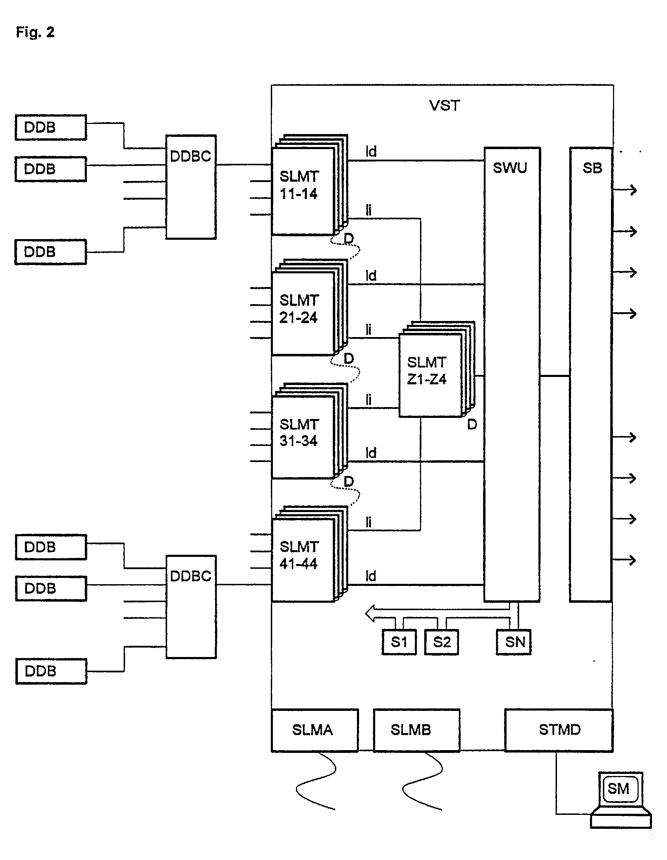

In Fig. 2 ist das aus der CH-PS 684 812 bekannte Kommunikationssystem gezeigt, das eine Vermittlungsstelle VST aufweist, an die einerseits über digitale und analoge Schnittstellenmodule SLMA, SLMB herkömmliche Endgeräte und andererseits über Konzentratorbaugruppen DDBC sowie über Peripheriemodule bzw. vermittlungstechnische Server SLMT mehrere Sonderendgeräte DDB (DIGITAL DEALER BOARD) angeschlossen sind. Die Vermittlungsstelle VST ist ferner über eine Schnittstellenbaugruppe SB mit weiteren öffentlichen oder privaten Kommunikationssystemen verbunden.

Zentraler Bestandteil der Vermittlungsstelle VST ist eine Durchschalteeinheit SWU, in der alle der Durchschaltung von Verbindungen dienenden zentralen Einheiten sowie eine hierzu erforderliche zentrale Steuerung integriert ist. Die Durchschalteeinheit SWU ist ferner mit den Peripheriemodulen SLMA und SLMB, einem Schnittstellenmodul STMD sowie mit der Schnittstellenbaugruppe SB verbunden. Die Schnittstellenbaugruppe SB stellt ausgangsseitig die Verbindung zu anderen Nebenstellenanlagen sowie zu externen Kommunikationssystemen her. Letztere können beispielsweise öffentliche, digital oder analog ausgestaltete Kommunikationssysteme sein. Die Verbindung zwischen diesen Kommunikationssystemen und der Vermittlungsstelle VST kann dabei über Stand- oder Mietleitungen erfolgen. Das Kommunikationssystem ist ISDN-systemgerecht In öffentliche Kommunikationsnetze eingebunden; die Schnittstelleneinheit SB muss diese Einbindung durch Bereitstellung spezieller Datenformate sicherstellen. Des weiteren ist die Durchschalteeinheit SWU mit Integrierten Servern S1 ... Sn über zentrale Bussysteme verbunden. Die mit der Durchschalteeinheit SWU verbundenen Peripheriemodule SLMA und SLMB dienen der Bereitstellung der in der Vermittlungstechnik allgemein bekannten BORSCHT-Funktionen für die herkömmlichen analogen bzw. digitalen Teilnehmerendgeräte. Mit einem System Manager SM werden über eine Schnittstelleneinheit STMD, z.B. bei notwendigen Konfigurationsänderungen, entsprechende Anpassungen der Elemente des in Fig. 2 gezeigten Kommunikationssystems durchgeführt.

Die vermittlungstechnischen Server sind als Sonderperipheriemodule, im folgenden Servermodule SLMT11,..., SLMT44; SLMT Z1,..., SLMT Z4 genannt, realisiert. Sie werden dezentral in die Vermittlungsstelle VST eingebunden, Indem sie anstelle von Peripheriemodulen SLMB eingefügt werden. Die systemkonforme Einbindung erfordert umfangreiche Anpassungsmassnahmen an den betreffenden Hard- und Software-Schnittstellen, worauf später noch eingegangen wird. Vorzugsweise werden, bei höherem Ausbaugrad der Händleranlage, die vermittlungstechnischen Server in Systemgruppen geordnet. Vier Einzel-Systemgruppen mit je vier vermittlungstechnischen Servern wird dabei vorzugsweise eine zentrale Systemgruppe mit vier vermittlungstechnischen Servern zugeordnet.

In einer ersten Ausbauphase, für kleinere Händlerteams, wird nur eine einzelne Systemgruppe mit vier Servermodulen SLMT11,..., SLMT14 verwendet, die untereinander über Datenwege D und/oder ein zentrales Servermodul SLMT Z1 verbunden sind. In den nächsten Ausbaustufen können weitere Systemgruppen mit je vier Servermodulen SLMT21,..., SLMT24; SLMT31,..., SLMT34; SLMT41,..., SLMT44, hinzugefügt werden. Diese vier Einzel-Systemgruppen können erfindungsgemäss direkt über zusätzliche Datenwege und/oder über eine zusätzliche, zentrale Systemgruppe mit Servermodulen SLMT Z1,..., SLMT Z4 miteinander vernetzt werden. Jede der vier Einzel-Systemgruppen wird dabei je mit einem der untereinander über Datenwege D verbundenen Servermodule SLMT Z1,..., SLMT Z4 der zentralen Systemgruppe über Leitungen li verbunden. Die maximale Anzahl Servermodule SLMT pro Einzel-Systemgruppe wird dabei durch die Kapazität der auf den Servermodulen verwendeten Durchschalteeinheiten SWU bestimmt. Von jeder Systemgruppe können beispielsweise x Leitungen (und eine HDLC-Signalisierungsleitung) zur zentralen Systemgruppe verbunden werden. Eine Systemgruppe hat somit Zugriff zu x gemeinsamen Leitungen. Die zentrale Systemgruppe verfügt daher über 4*(x+1) Anschlüsse, wovon vier Anschlüsse für die HDLC-Signalisierung der Einzel-Systemgruppen vorgesehen sind. Die verbleibenden 4*x Anschlüsse können dabei beliebig für Verbindungen zu den Einzel-Systemgruppen oder für gemeinsame Leitungen verwendet werden. Ausgangsseitig sind die Servermodule SLMT11, ..., SLMT44 über Konzentratorbaugruppen DDBC mit den Sonderendgeräten DDB mittels Lichtwellenleitern verbunden. Die Konzentratorbaugruppen DDBC sind dazu mit Multiplexeigenschaften ausgestattet, um die von mehreren Sonderendgeräten DDB ankommenden Daten auf eine Verbindungsleitung zu einem der Servermodule SLMT11, ..., SLMT44 zu schalten. Als Übertragungsverfahren wird ein PCM (Puls Code Modulation) Verfahren verwendet. Sonderendgeräte DDB können entweder für den Händlerarbeitsplatz konzipierte tasten- oder bildschirm-orientierte Endgeräte sein, die wenigstens einen Handapparat aufweisen. Das Ansteuern der Sonderendgeräte DDB erfolgt über die Servermodule SLMT unter Verwendung von Steuerprozeduren BS, BT.

Generell sind die auf den Servermodulen SLMT ablaufenden Prozeduren organisatorisch in entsprechende Komplexen auf den Servermodulen SLMT abgelegt. Die gesamte die Servermodule SLMT betreffende Software unterscheidet dabei Prozeduren
- des Betriebssystems BS
- der Betriebstechnik BT
- der Vermittlungstechnik VT
- der Sicherheitstechnik ST
- sowie der Datenbank DB.

Während die Prozeduren des Betriebssystems BS die vorhandenen Systemkomponenten steuern, übernehmen die Prozeduren der Betriebstechnik BT Steueraufgaben im Bereich
- der Zeitsynchronisation zu den restlichen Einheiten des Kommunikationssystems
- sowie der Systemzuverlässigkeit.

Der störungsfreie Betrieb jedes Servermoduls SLMT wird von der Sicherheitstechnik ST sichergestellt. Sie sorgt insbesondere dafür, dass auftretende Fehler sofort analysiert und bei Bedarf entsprechende Reaktionen von Seiten des Systems ausgelöst werden.

Die Prozeduren des vermittlungstechnischen Funktionsblocks VT der Servermodule SLMT bearbeiten die eigentlichen händlertypischen Leistungsmerkmale. Händlertypische Leistungsmerkmale sind zum Beispiel
- Sprachüberwachung,
- Makeln,
- Parallelruf-,
- Konferenzgesprächs-
- sowie Mithör- und Mitschreibfunktionen,
worauf unten noch näher eingegangen wird. Insbesondere führen die Prozeduren des vermittlungstechnischen Funktionsblocks VT der Servermodule SLMT die Umsetzung der von den Sonderendgeräten DDB ankommenden Datenformate in die Datenformate des Kommunikationssystems durch.

Des weiteren ist auf den Servermodulen SLMT je eine Datenbank DB abgelegt, in welcher statische und dynamische Konfigurationsdaten der Sonderendgeräte DDB sowie der Servermodule SLMT selbst verwaltet werden. Die statischen Konfigurationsdaten geben Auskunft über die Bestückung der Sonderendgeräte DDB mit Handapparaten und Lautsprechern, während die dynamischen Konfigurationsdaten Informationen über momentane Belegungszustände der Handapparate sowie der angeschlossenen Leitungen vermitteln. Über Datenwege D werden die Datenbanken jedes Servermoduls SLMT mit den neuesten Konfigurationsdaten aktualisiert. Somit hat jedes Servermodul SLMT ein vollständiges Abbild der gesamten Konfiguration aller Servermodule SLMT. Eine eventuelle Änderung des Konfigurationszustandes eines der Servermodule SLMT oder eines der Sonderendgeräte DDB wird umgehend über die Datenwege D den übrigen Servermodulen SLMT mitgeteilt. Mit diesem Konzept Ist eine Dezentralisierung statischer sowie dynamischer Konfigurationsdaten verbunden. Dies bedeutet, dass z.B. bei der Erstellung neuer Leistungsmerkmale allfällige Änderungen ohne grossen Aufwand auf den Servermodulen SLMT durchgeführt werden können, ohne dabei zentral in die Prozeduren des Kommunikationssystems eingreifen zu müssen.

Ferner sind an das Kommunikationssystem über die Schnittstelleneinheit STMD externe Speichereinheiten mit Datensichtgerät - im folgenden System Manager SM genannt - angeschlossen, die Konfigurationsdaten für die Servermodule SLMT und die Sonderendgeräte DDB enthalten. Die Verlagerung der Konfigurationsdaten zu externen Einheiten kommt insbesondere dann zum Tragen, wenn das Kommunikationssystem für Wartungsarbeiten abgeschaltet werden muss. In diesem Fall werden beim Hochlauf des Kommunikationssystems die Servermodule SLMT sowie die Sonderendgeräte DDB mit den Konfigurationsdaten vom System Manager SM geladen, womit der ursprüngliche Zustand in kurzer Zeit wiederhergestellt ist.

Aus diesem Konzept resultieren Leistungsmerkmale, die den speziellen Bedürfnissen eines Händlerarbeitsplatzes Rechnung tragen. Insbesondere das Leistungsmerkmal "Sprachüberwachung", durch das mehrere Gespräche z.B. über einen Konferenzbaustein oder einen Signalprozessor auf einen Lautsprecher geschaltet werden können, berücksichtigt die besonderen Bedingungen des Händlerarbeitsplatzes.

Bei dem bekannten Kommunikationssystem (Fig. 2) erfolgt der Verbindungsaufbau von einem der Sonderendgeräte DDB zu einem externen Teilnehmer daher immer über das gleiche Servermodul SLMT, die in der Vermittlungsstelle VST vorgesehene Durchschalteeinheit SWU sowie die Schnittstellenbaugruppe SB. Dabei können nur Mietleitungen benutzt werden, die mit der Schnittstellenbaugruppe SB verbunden sind. Beim Ausfall des Servermoduls SLMT, der Durchschalteeinheit SWU oder der Schnittstellenbaugruppe SB können ausgehend von den Sonderendgeräten DDB keine Verbindungen zu externen Teilnehmern mehr erstellt werden. Bei einer verkehrstechnischen Überlastung des Systems können die Verbindungen nur mit entsprechender Verzögerung erstellt werden.

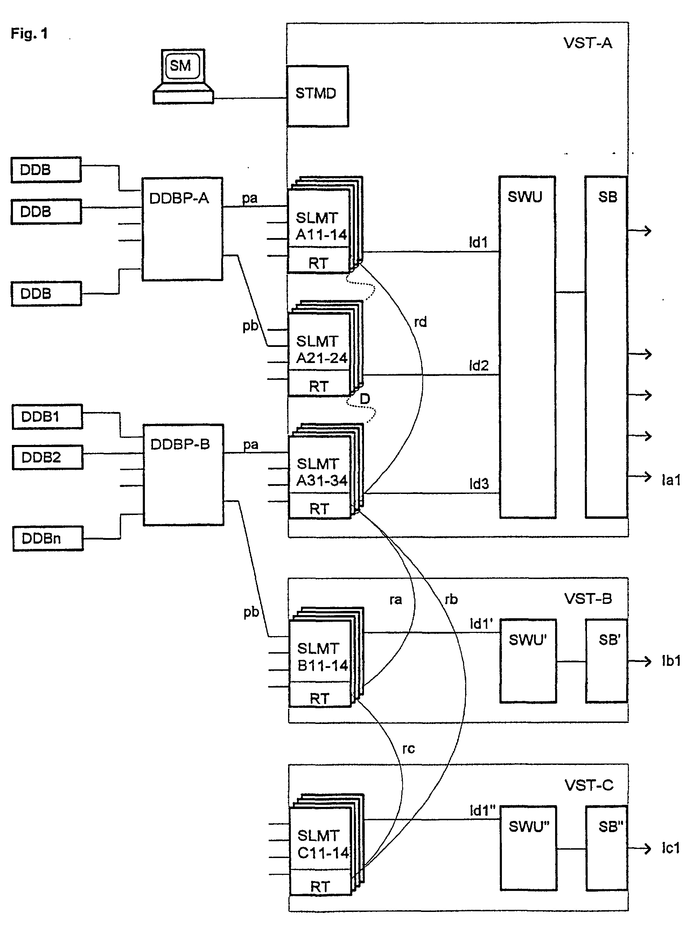

Diese Nachteile wurden bei der Schaffung des in Fig. 1 gezeigten Kommunikationssystems beseitigt.

Die Sonderendgeräte DDB sind dabei über einen erweiterten Konzentrator DDBP mit wenigstens zwei Servermodulen SLMT verbunden. Alternativ können die Sonderendgeräte DDB über einen herkömmlichen z.B. aus Fig. 2 bekannten Konzentrator DDBC sowie ein speziell ausgestaltetes Servermodul SLMT mit wenigstens einem weiteren Servermodul SLMT verbunden sein. Diese Verbindungen zwischen den Servermodulen SLMT, die zur Übertragung von Sprach- und Servicesignalen (B- und D-Kanaldaten) vorgesehen sind, sind normalerweise nicht physikalisch durchgeschaltet, sondern werden für bestimmte Zieladressen bei Bedarf aufgebaut. Es handelt sich bei diesen Verbindungen um virtuelle Verbindungen, die vom Teilnehmer als fest durchgeschaltete Leitungen wahrgenommen werden. Diese Massnahme wird nachfolgend als Routerfunktion bezeichnet. Bevorzugt werden die beiden beschriebenen Massnahmen kumulativ angewendet.

Gemäss Fig. 1 können die beschriebenen Massnahmen innerhalb einer Vermittlungsstelle VST oder übergreifend über mehrere Vermittlungsstellen VST vorteilhaft angewendet werden.

Die Sonderendgeräte DDB sind dazu über einen erweiterten Konzentrator DDBP-A, DDBP-B mit wenigstens zwei Servermodulen SLMT A11, SLMT A21 bzw. SLMT A31, SLMT B11 verbunden, die in der Vermittlungsstelle VST-A bzw. in der Vermittlungsstelle VST-A und der Vermittlungsstelle VST-B angeordnet sind.

Innerhalb der Vermittlungsstelle VST-A von dem mit dem erweiterten Konzentrator DDBP-A verbundenen Servermodul SLMT A11 zum Servermodul SLMT A31 ist ferner eine Routerleitung rd vorgesehen.

Übergreifend über die Vermittlungsstellen VST-A, VST-B und VST-C sind zwischen den Servermodulen SLMT A31, SLMT B11 bzw. SLMT A31, SLMT C11 bzw. SLMT B11, SLMT C11 weitere Routerieitungen ra, rb und rc vorgesehen. Die Vermittlungsstellen VST-A bzw. VST-B, die z.B. im Hauptsitz und einer wenige Kilometer entfernten Zweigstelle eines Unternehmens installiert sind, sind dabei durch festinstallierte Datenleitungen und/oder über das öffentliche Netz miteinander verbunden. Die Vermittlungsstelle VST-C kann in einer grösseren Entfernung, z.B. in einem anderen Land oder Kontinent installiert und in das lokale Fernmeldenetz eingebunden sein.

Die Aufgabe eines Konzentrators, wie er in P. Bocker, Datenübertragung, Springer Verlag, Heidelberg 1978, Band 1, Kapitel 6.1.6., Seiten 245 und 246 beschrieben ist, besteht darin den von mehreren Datenstationen (z.B. Endgeräten) ankommenden Verkehr auf eine Leitung zu konzentrieren. Der erweiterte Konzentrator DDBP erlaubt die Konzentration des von den Sonderendgeräten DDB eintreffenden Verkehrs auf wenigstens zwei Leitungen, die mit den zugehörigen Servermodulen SLMT verbunden sind. Vorzugsweise ist im erweiterten Konzentrator DDBP zusätzlich ein Koppelnetzwerk vorgesehen, durch das die Sonderendgeräte DDB wählbar mit einem der angeschlossenen Servermodule SLMT verbindbar ist. Eine derartige Kombination von einem Konzentrator und einer Mischstufe ist z.B. aus Herter/Röcker Nachrichtentechnik, Übertragung und Verarbeitung, Carl Hanser Verlag, München 1976, Seite 243, Bild 2.6-12 bekannt. Anstelle der in diesem Bild gezeigten Expansionsstufen werden erfindungsgemäss die zu den Servermodulen SLMT geführten Leitungen eingesetzt. Ferner ist im erweiterten Konzentrator DDBP bevorzugt auch eine Konferenzeinheit (realisiert mit einem Konferenzbaustein oder einem Signalprozessor) vorgesehen, durch die die in verschiedenen Zeitschlitzen enthaltenen Gesprächsanteile summiert und den betreffenden Konferenzteilnehmern zugeführt werden. Dazu wird in den betreffenden Zeitschlitzen das einzelne Gesprächssignal durch das neu gebildete Summensignal ersetzt.

Nachfolgend wird die Erfindung ausgehend von den mit dem erweiterten Konzentrator DDBP-B verbundenen Sonderendgeräten DDB1, ..., DDBn näher erläutert. Dem erweiterten Konzentrator DDBP-B werden von den verbundenen Servermodulen SLMT A31, SLMT B11 Zeitschlitze zur Verfügung gestellt, die den einzelnen Sonderendgeräten DDB zuzuordnen sind. Von dem In Fig. 1 gezeigten Sonderendgerät DDB1 und dem zugehörigen erweiterten Konzentrator DDBP-B kann daher einerseits über die Vermittlungsstelle VST-A (via Leitung pa, Servermodul SLMT A31, Durchschalteeinheit SWU, Schnittstellenbaugruppe SB und Leitung la1) und andererseits über die Vermittlungsstelle VST-B (via Leitung pb, Servermodul SLMT B11, Durchschalteeinheit SWU, Schnittstellenbaugruppe SB und Leitung lb1) z.B. eine Verbindung zum öffentlichen Netz aufgebaut werden.

Zur Realisierung der Routerfunktion werden die von den Servermodulen SLMT verwalteten Zeitschlitze bedarfsweise in zwei Gruppen aufgeteilt, von denen die erste für die Vermittlung von Gesprächen über die zugeordnete Durchschalteeinheit SWU und von denen die zweite für die Vermittlung von Gesprächen über Routerleitungen ra, rb, ... zu weiteren Servermodulen SLMT vorgesehen sind. Die in Fig. 1 symbolisch dargestellten Routerleitungen ra, rb, ..., die je zwei Servermodule SLMT miteinander verbinden, können über die Durchschalteeinheiten SWU und das öffentliche Netz oder über Standleitungen verlaufen. Wesentlich dabei ist, dass Zeitschlitze in genügend grosser Zahl für die Routerfunktionen zur Verfügung stehen, so dass die Verbindungen zwischen zwei Servermodulen SLMT praktisch ohne zeitliche Verzögerung erstellt werden können.

Durch den System Manager SM werden den einzelnen Servermodulen SLMT die den betreffenden Rufnummern zugeordneten Verkehrswege für die Routerfunktionen mitgeteilt. Ebenso wird dem Sonderendgerät DDB und/oder dem erweiterten Konzentrator DDBP-B vom System Manager SM die den Rufnummern entsprechenden Verkehrswege mitgeteilt.

Bei der Verbindung mittels der Routerfunktion muss daher von einem ersten zu einem zweiten Servermodul SLMT A31; SLMT B11 eine Verbindung erstellt werden. Nachfolgend soll ausgehend vom zweiten Servermodul SLMT B11 eine Verbindung zum gerufenen Teilnehmer erstellt werden.

Für den Verbindungsaufbau zwischen zwei Endgeräten sind im ISDN die folgenden Verfahrensschritte vorgesehen, die grundsätzlich in P. Bocker, ISDN das diensteintegrierende digitale Nachrichtennetz, Springer Verlag, Heidelberg 1990, Kapitel 4.3.5.1, Bild 4.23 dargestellt sind. Daraus ist ersichtlich, dass ein rufendes Endgerät nach dem Wählvorgang immer eine SETUP-Meldung an das Netz abgibt, die aus den in P. R. Gerke, Digitale Kommunikationsnetze, Springer Verlag, Heidelberg 1991, Seite 360, Tabelle 7.5 aufgelisteten Elementen besteht. Darin enthalten sind Datenfelder für die Ursprungsadresse (Origination Adress), die Zieladresse (Destination Adress) und normalerweise auch für Benutzer-Benutzer-Informationen (User-User-Information), die vom Netz nicht interpretiert werden (bezüglich Benutzer-Benutzer-Signalisierung siehe P. Bocker, ISDN das diensteintegrierende digitale Nachrichtennetz, Springer Verlag, Heidelberg 1990, Kapitel 4.3.5.5).

Der erste Schritt beim Verbindungsaufbau z.B. vom Sonderendgerät DDB1 zu einem externen Teilnehmer besteht darin, dass in bekannter Weise zuerst eine Verbindung zum zugehörigen Servermodul SLMT A31 aufgebaut wird. Für die Weiterverbindung verwendet das Servermodul SLMT A31 die Zieladresse des Servermoduls SLMT B11, die gemäss Instruktionen vom System Manager SM zur Rufnummer des Teilnehmers korrespondiert. Im Servermodul SLMT A31 wird daher die Rufnummer des gerufenen Teilnehmers durch die Rufnummer des Servermoduls SLMT B11 im Feld Zieladresse ersetzt, so dass zwischen den Servermodulen SLMT A31 und SLMT B11 eine Verbindung aufgebaut werden kann. Die Rufnummer des Teilnehmers wird aus dem Feld Zieladresse entfernt und im Feld Benutzer-Benutzer-Information in die SETUP-Meldung eingeschrieben. Falls die Möglichkeit zur Eingabe einer Benutzer-Benutzer-Information fehlt, erlaubt die ISDN-Schnittstelle femer eine called-party-number (ISDN(ISDN-Meldungselement, das die Rufnummer des gerufenen Teilnehmers enthält) einzufügen. Nachdem die Verbindung zwischen den Servermodulen SLMT A31 und SLMT B11 erstellt ist, wird durch das gerufene Servermodule SLMT B11 die Rufnumer aus dem Feld Benutzer-Benutzer-Information entnommen und in das Feld Zieladresse eingefügt. Anschliessend wird in bekannter Weise die Verbindung zum gerufenen Teilnehmer erstellt.

Eine kontinuierliche Überwachung der Verkehrswege erlaubt daher dem System Manager SM die Servermodule SLMT, die erweiterten Konzentratoren DDBP-B und/oder die Sonderendgeräte DDB regelmässig derart zu instruieren, dass immer die günstigsten Verbindungen erstellt werden. Falls im obenerwähnten Beispiel dem System Manager SM der Ausfall des Servermoduls SLMT B11 gemeldet wird, so Ist er in der Lage, das Servermodul SLMT A31, den erweiterten Konzentrator DDBP-B und die Sonderendgeräte DDB1, ..., DDBn derart zu instruieren, dass die früher vorgesehenen Verkehrswege über das nun defekte Servermodul SLMT B11 nicht mehr gewählt werden.

Nachteilig bei dieser Lösung mit zentralisierter Überwachungsfunktion ist, dass bei einem Ausfall des System Managers SM das einwandfreie Arbeiten des Systems nicht mehr gewährleistet ist. Vorzugsweise wird daher in jedem Servermodul SLMT, in jedem erweiterten Konzentrator DDBP oder in jedem Sonderendgerät DDB ein eigenes Rechnersystem vorgesehen, das zur Überwachung der Verkehrswege geeignet ist.

Falls die von der Vermittlungsstelle VST-C abgehende Leitung lc1 eine Mietleitung ist, die an die Teilnehmeranlage des angewählten Teilnehmers angeschlossen ist, so wird die Verbindung vorzugsweise über die Vermittlungsstelle VST-C erstellt. Treten auf dieser Mietleitung Probleme auf oder wird die Vermittlungsstelle VST-C als defekt gemeldet, so erfolgt der Verbindungsaufbau über die Vermittlungsstelle VST-A oder VST-B und das öffentliche Netz. Dazu muss die vorhandenen Zieladresse mit einem Adressteil ergänzt werden, der für den Aufbau eines zu der Mietleitung parallel vorgesehenen Verkehrsweges geeignet ist.

Zu diesem Zweck ist im System Manager SM, in jedem Servermodul SLMT A11, ..., SLMT A34; SLMT B11, ..., SLMT B14; SLMT C11, ..., SLMT C14, In jedem erweiterten Konzentrator DDBP oder in jedem Sonderendgerät DDB eine Datenbank mit einer Prioritätenliste enthalten, in der für Zieladressen verschiedene Verkehrswege mit unterschiedlichen Prioritäten eingetragen sind. Ein Verkehrsweg setzt sich dabei aus Vermittlungsstellen und Übertragungsleitungen zusammen, deren Zustand in der Prioritätenliste gekennzeichnet werden kann. Für Verkehrswege, die kostengünstige nutzbare Mietleitungen enthalten, wird normalerweise eine erhöhte Priorität festgelegt. Für eine einer Zieladresse (Rufnummer) entsprechende Verbindung soll dabei immer der Verkehrsweg gewählt werden, der die höchste Priorität und als funktionierend gemeldete Vermittlungsstellen und Übertragungsleitungen aufweist. Im System Manager SM,. in den Servermodulen SLMT A11, ..., SLMT A34; SLMT B11, ..., SLMT B14; SLMT C11, ..., SLMT C14, In den erweiterten Konzentratoren DDBP oder in den Sonderendgeräten DDB wird der Zustand von Vermittlungsstellen und Übertragungsleitungen überwacht. Dazu werden von den überwachten Modulen (SLMT; SB; SWU) und internen oder externen Leitungen (pa und pb; ra, rb und rc; la1, ...) Statusmeldungen entgegengenommen. Zustandsänderungen werden sodann in die Datenbanken des System Managers SM, der Sonderendgeräte DDB, der erweiterten Konzentratoren DDBP-B und/oder der Servermodule SLMT A11, ..., SLMT A34; SLMT B11, ..., SLMT B14; SLMT C11, ..., SLMT C14 eingeschrieben, wonach die erforderlichen Änderungen in der Wahl der Verkehrswege erfolgen.

Falls ein einer Zieladresse zugeordneter Verkehrsweg, in den die Durchschalteeinheit SWU der Vermittlungsstelle VST-A eingeschlossen ist, die höchste Priorität aufweist und wird diese Durchschalteeinheit SWU als defekt gemeldet, so werden für diese Zieladresse die Verkehrsweg-Informationen mit der nächsttieferen Priorität gewählt. Der Austausch von Zustandsinformationen zwischen den Vermittlungsstellen VST sowie deren Modulen, den Servermodulen SLMT, den Konzentratoren DDBC und DDBP-B und den Sonderendgeräten DDB erfolgt dabei bevorzugt über einen Hilfskanal; z.B. den in P. Bocker, ISDN das diensteintegrierende digitale Nachrichtennetz, Springer Verlag, Heidelberg 1990, Kapitel 1.5, Seite 6 ff. beschriebenen D-Kanal. In Kapitel 6.3, auf Seite 161 ff. a.a.O. ist ferner die entsprechende Zwischenamtssignalisierung beschrieben, durch die u.a. auch Zusatzdienstmerkmale realisierbar sind

Das Überschreiben der Verkehrsweg-Informationen in den Datenbanken erfolgt periodisch, beim Einschalten des Systems und/oder beim Auftreten von Zustandsänderungen.

Oben wurde bereits erläutert, dass die Konfigurationsdaten für die Sonderendgeräte DDB im System Manager SM abgelegt sind. Beim Hochlauf des Kommunikationssystems werden die Servermodule SLMT sowie die Sonderendgeräte DDB normalerweise immer mit denselben Konfigurationsdaten geladen, womit der ursprüngliche Zustand wiederhergestellt ist. Dabei wird davon ausgegangen, dass der Systembenutzer immer auf dasselbe Sonderendgerät DDB zugreift, auf dem er die von ihm geschaffene Arbeitsumgebung mit programmierten Wahl- und Sonderfunktionstasten, etc. wiederfindet. Vorzugsweise wird das Kommunikationssystem jedoch dahingehend erweitert, dass die Konfigurationsdaten nur noch einem Sonderendgerät DDB zugeführt werden, falls der Benutzer, zu dessen Arbeitsumgebung die Konfigurationsdaten passen, das Sonderendgerät DDB bedient. Vorzugsweise sind die Konfigurationsdaten daher von einem beliebigen Sonderendgerät DDB her, geschützt durch ein Passwort, durch den berechtigten Benutzer abrufbar. Dies erlaubt dem Benutzer eine systemweite frei Platzwahl. Falls das Kommunikationssystem über vemetzte Vermittlungsstellen VST-A, VST-B und VST-C verfügt, die z.B. in Zürich; London und Tokyo installiert und bevorzugt durch Routerleitungen miteinander verbunden sind, so kann ein einzelner Benutzer an jedem dieser Standorte an einem beliebigen Sonderendgerät DDB seine gewohnte Arbeitsumgebung durch Abruf seiner individuellen Konfigurationsdaten erstellen.

Normalerweise wird ein Sonderendgerät DDB als Standard- oder Defaultarbeitsplatz eingerichtet. Falls ein anderes Sonderendgerät DDB als Arbeitsplatz gewählt wird, sind eintreffende Gespräche zu diesem Arbeitsplatz umzuleiten. Entsprechende Verkehrswege-Informationen sind daher in die Tabellen der Servermodule SLMT A11, ..., SLMTA34; SLMT B11, ..., SLMT B14; SLMT C11, ..., SLMT C14 einzutragen. Ein Anruf kann daher über ein erstes Servermodul SLMT und vorzugsweise eine Routerleitung r zu einem weiteren Servermodul SLMT und von dort zum neuen Arbeitsplatz des Benutzers weitergeleitet werden.

## Patentansprüche

1. Kommunikationssystem mit einer digitalen Vermittlungsstelle (VST-A), die eine der Durchschaltung von Verbindungsleitungen dienende Durchschalteeinheit (SWU), wenigstens einen Daten und Programme für Leistungsmerkmale bereitstellenden zentralen Server (S1, ..., Sn) und die wenigstens ein mit der Durchschalteeinheit (SWU) und Sonderendgeräten (DDB) verbundenes dezentrales Servermodul (SLMT A11, ..., SLMT A34) aufweist,
wobei wenigstens ein erweiterter Konzentrator (DDBP-B) vorgesehen ist, über den daran angeschlossene Sonderendgeräte (DDB) mit zwei oder mehreren Servermodulen (SLMT A11, ..., SLMT A34; SLMT B11, ..., SLMT B14; SLMT C11, ..., SLMT C14) verbunden sind und dass wenigstens zwei Servermodule (SLMT A11, ..., SLMT A34; SLMT B11, ..., SLMT B14; SLMT C11, ..., SLMT C14) zwei Gruppen von Zeitschlitzen verwalten, von denen die erste Gruppe zur Durchschaltung von Gesprächsverbindung zwischen zwei Sonderendgeräten und die zweite Gruppe zur Errichtung von Gesprächsverbindungen über Routerleitungen (ra, ..., rd) zu weiteren Servermodulen (SLMT A11, ..., SLMT A34; SLMT B11, ..., SLMT B14; SLMT C11, ..., SLMT C14) vorgesehen sind, **dadurch gekennzeichnet, dass** in den Sonderendgeräten (DDB) und/oder in den erweiterten Konzentratoren (DDBP-B) und/oder in den Servermodulen (SLMT A11, ..., SLMT A34; SLMT B11, ..., SLMT B14; SLMT C11, ..., SLMT C14) Datenbanken enthalten sind, in denen zu Zieladressen korrespondierende Verkehrswege-Informationen abgelegt sind.

2. Kommunikationssystem nach Anspruch 1,
**dadurch gekennzeichnet,**
**dass** wenigstens eine weitere derartige mit dezentralen Servermodulen (SLMT B11, ..., SLMT B14; SLMT C11, ..., SLMT C14) versehene Vermittlungsstelle (VST-B, VST-C) vorgesehen ist, dass wenigstens ein erweiterter Konzentrator (DDBP-B) vorgesehen ist, über den daran angeschlossene Sonderendgeräte (DDB) mit zwei oder mehreren Servermodulen (SLMT A11, ..., SLMT A34; SLMT B11, ..., SLMT B14; SLMT C11, ..., SLMT C14) verbunden sind, die in verschiedenen Vermittlungsstellen (VST-A, VST-B, VST-C) angeordnet sind.

3. Kommunikationssystem nach Anspruch 1 oder 2,
**dadurch gekennzeichnet,**
**dass** der erweiterte Konzentrator (DDBP-B) und/oder die Servermodule (SLMT A11, ..., SLMT A34; SLMT B11, ..., SLMT B14; SLMT C11, ..., SLMT C14) eine Konferenzeinheit aufweisen, durch die in verschiedenen Zeitschlitzen enthaltene Gesprächsanteile summiert und den betreffenden Konferenzteilnehmern zugeführt werden.

4. Kommunikationssystem nach einem der Ansprüche 1 bis 3,
**dadurch gekennzeichnet,**
**dass** die Informationen zu den vorgesehenen Verkehrswegen, deren Bestandteil virtuelle Routerleitungen (ra, ...; rd) sein können, durch einen mit einer Vermittlungsstelle (VST-A, VST-B, ..) verbundenen System Manager (SM) in die Datenbanken der Sonderendgeräte (DDB), der erweiterten Konzentratoren (DDBP-B) und/oder der Servermodule (SLMT A41,..., SLMT A34; SLMT B11, ..., SLMT B14; SLMT C12, ..., SLMT C14) einschreibbar sind.

5. Kommunikationssystem nach Anspruch 4,
**dadurch gekennzeichnet,**
**dass** der System Manager (SM), die Sonderendgeräte (DDB), die erweiterten Konzentratoren (DDBP-B) und/oder die Servermodule (SLMT A41,..., SLMT A34; SLMT B11, ..., SLMT B14; SLMT C11, ..., SLMT C14) eine Prioritätenliste aufweisen, in die Verkehrswege-Informationen derart eingeschrieben sind, dass für jede Zieladresse ein Verkehrsweg oder mehrere nach Prioritäten geordnete Verkehrswege aufgezeichnet sind.

6. Kommunikationssystem nach Anspruch 5,
**dadurch gekennzeichnet,**
**dass** der System Manager (SM), die Sonderendgeräte (DDB), die erweiterten Konzentratoren (DDBP-B) und/oder die Servermodule (SLMT A41, ..., SLMT A34; SLMT B11, ..., SLMT B14; SLMT C11, ..., SLMT C14) zur Überwachung des Zustandes der Teilabschnitte der Verkehrswege und zur Festlegung des einer gewählten Zieladresse entsprechenden Verkehrsweges geeignet sind, welcher intakte Teilabschnitte und die höchste Priorität aufweist.

7. Kommunikationssystem nach einem der Ansprüche 4 bis 6,
**dadurch gekennzeichnet,**
**dass** Konfigurationsdaten, die im System Manager (SM), in den Sonderendgeräten (DDB), in den erweiterten Konzentratoren (DDBP-B) und/oder in den Servermodulen (SLMT A41,..., SLMT A34; SLMT B11, ..., SLMT B14; SLMT C11, ..., SLMT C14) abgelegt sind, benutzerspezifisch ausgelegt sind und von einem Benutzer von jedem im Kommunikationssystem eingeschlossenen Sonderendgerät (DDB) direkt oder über ein Passwort abrufbar sind, so dass das jeweils benutzte Sonderendgerät (DDB) mit den benutzerindividuellen Daten konfigurierbar ist.

## Claims

1. Communication system with a digital switching centre (VST-A), which has a switching unit (SWU) to switch through connecting lines, at least one central server (S1, ..., Sn) supplying data and programs for performance features and which has at least one local server module (SLMT A11, ..., SLMT A34) connected to the switching unit (SWU) and special terminals (DDB), whereby at least one extended concentrator (DDBP-B) is provided, by means of which special terminals (DDB) linked to it are connected to two or more server modules (SLMT A11, ..., SLMT A34; SLMT B11, ..., SLMT B14; SLMT C11, ..., SLMT C14) and at least two server modules (SLMT A11, ..., SLMT A34; SLMT B11, ..., SLMT B14; SLMT C11, ..., SLMT C14) manage two sets of time slots, of which the first set is provided to switch call connections between two special terminals and the second set to set up call connections via router lines (ra, ..., rd) to other server modules (SLMT A11, ..., SLMT A34; SLMT B11, ..., SLMT B14; SLMT C11, ..., SLMT C14), **characterised in that** there are databases in the special terminals (DDB) and/or in the extended concentrators (DDBP-B) and/or in the server modules (SLMT A11, ..., SLMT A34; SLMT B11, ..., SLMT B14; SLMT C11, ..., SLMT C14), in which traffic channel data corresponding to destination addresses is stored.

2. Communication system according to Claim 1, **characterised in that** at least one more similar switching centre (VST-B, VST-C) with local server modules (SLMT B11, ..., SLMT B14; SLMT C11, ..., SLMT C14) is provided, that at least one extended concentrator (DDBP-B) is provided, via which special terminals (DDB) linked to it are connected to two or more server modules (SLMT A11, ..., SLMT A34; SLMT B11, ..., SLMT B14; SLMT C11, ..., SLMT C14), which are located in different switching centres (VST-A, VST-B, VST-C).

3. Communication system according to Claim 1 or 2, **characterised in that** the extended concentrator (DDBP-B) and/or the server modules (SLMT A11, ..., SLMT A34; SLMT B11, ..., SLMT B14; SLMT C11, ..., SLMT C14) has a conference unit, by means of which the call components received in different time slots are brought together and routed to the relevant conference participants.

4. Communication system according to one of Claims 1 to 3, **characterised in that** the data on the traffic channels provided, a component of which may be virtual router lines (ra, ...; rd), can be input into the databases of the special terminals (DDB), the extended concentrators (DDBP-B) and/or the server modules (SLMT A41, ..., SLMT A34; SLMT B11, ..., SLMT B14; SLMT C11, ..., SLMT C14) via a system manager (SM) connected to a switching centre (VST-A, VST-B, ...).

5. Communication system according to Claim 4, **characterised in that** the system manager (SM), the special terminals (DDB), the extended concentrators (DDBP-B) and/or the server modules (SLMT A41, ..., SLMT A34; SLMT B11, ..., SLMT B14; SLMT C11, ..., SLMT C14) have a priority list, into which traffic channel data is input so that one traffic channel or a number of prioritised traffic channels are listed for each destination address.

6. Communication system according to Claim 5, **characterised in that** the system manager (SM), the special terminals (DDB), the extended concentrators (DDBP-B) and/or the server modules (SLMT A41, ..., SLMT A34; SLMT B11, ..., SLMT B14; SLMT C11, ..., SLMT C14) are capable of monitoring the status of the sub-sections of the traffic channels and determining the traffic channel corresponding to a selected destination address, which has intact sub-sections and highest priority.

7. Communication system according to one of Claims 4 to 6, **characterised in that** configuration data which is stored in the system manager (SM), in the special terminals (DDB), in the extended concentrators (DDBP-B) and/or in the server modules (SLMT A41, ..., SLMT A34; SLMT B11, ..., SLMT B14; SLMT C11, ..., SLMT C14), is user-specific and can be retrieved by a user of any special terminal (DDB) included in the communication system directly or via a password, so that the special terminal (DDB) used in each instance can be configured with the user's individual data.

## Revendications

1. Système de communication avec un centre de commutation numérique (VST-A) qui comporte une unité d'interconnexion (SWU) servant à l'interconnexion de lignes de liaison, au moins un serveur central (S1 à Sn) fournissant des données et des programmes pour des services et au moins un module serveur décentralisé (SLMT A11 à SLMT A34) relié à l'unité d'interconnexior (SWU) et à des terminaux spéciaux (DDB),
dans lequel il est prévu au moins un concentrateur étendu (DDBP-B) par l'intermédiaire duquel des terminaux spéciaux (DDB) qui lui sont raccordés sont reliés à deux ou plusieurs modules serveurs (SLMT A11 à SLMT A34 ; SLMT B11 à SLMT B14; SLMT C11 à SLMT C14) et dans lequel au moins deux modules serveurs (SLMT A11 à SLMT A34 ; SLMT B11 à SLMT B14 ; SLMT C11 à SLMT C14) gèrent deux groupes de créneaux temporels dont le premier groupe est prévu pour l'interconnexion de liaison de conversation entre deux terminaux spéciaux et le deuxième groupe est prévu pour l'établissement de liaisons de conversation par l'intermédiaire de lignes d'acheminement (ra à rd) vers d'autres modules serveurs (SLMT A11 à SLMT A34 ; SLMT B11 à SLMT B14 ; SLMT C11 à SLMT C14),
**caractérisé par le fait que** les terminaux spéciaux (DDB), les concentrateurs étendus (DDBP-B) et/ou les modules serveurs (SLMT A11 à SLMT A34 ; SLMT B11 à SLMT B14 ; SLMT C11 à SLMT C14) contiennent des bases de données dans lesquelles sont enregistrées des informations de voies d'acheminement de trafic correspondant à des adresses de destination.

2. Système de communication selon la revendication 1,
**caractérisé par le fait qu'**il est prévu au moins un autre centre de commutation (VST-B, VST-C) de ce type muni de modules serveurs décentralisés (SLMT B11 à SLMT B14 ; SLMT C11 à SLMT C14), qu'il est prévu au moins un concentrateur étendu (DDBP-B) par l'intermédiaire duquel des terminaux spéciaux (DDB) qui lui sont raccordés sont reliés à deux ou plusieurs modules serveurs (SLMT A11 à SLMT A34 ; SLMT B11 à SLMT B14 ; SLMT C11 à SLMT C14) qui sont placés dans différents centres de commutation (VST-A, VST-B, VST-C).

3. Système de communication selon la revendication 1 ou 2,
**caractérisé par le fait que** le concentrateur étendu (DDBP-B) et/ou les modules serveurs (SLMT A11 à SLMT A34 ; SLMT B11 à SLMT B14 ; SLMT C11 à SLMT C14) comportent une unité de conférence par laquelle des parties de conversation contenues dans différents créneaux temporels sont cumulées et envoyées aux abonnés participant à la conférence.

4. Système de communication selon l'une des revendications 1 à 3,
**caractérisé par le fait que** les informations concernant les voies d'acheminement de trafic prévues, dont peuvent faire partie des lignes d'acheminement virtuels (ra à rd), peuvent être enregistrées par un gestionnaire de système (SM) relié à un centre de commutation (VST-A, VST-B, ...) dans les bases de données des terminaux spéciaux (DDB), des concentrateurs étendus (DDBP-B) et/ou des modules serveurs (SLMT A11 à SLMT A34 ; SLMT B11 à SLMT B14 ; SLMT C11 à SLMT C14).

5. Système de communication selon la revendication 4,
**caractérisé par le fait que** le gestionnaire de système (SM), les terminaux spéciaux (DDB), les concentrateurs étendus (DDBP-B) et/ou les modules serveurs (SLMT A11 à SLMT A34 ; SLMT B11 à SLMT B14 ; SLMT C11 à SLMT C14) comportent une liste de priorités dans laquelle des informations de voies d'acheminement de trafic sont enregistrées de telle sorte qu'une voie d'acheminement de trafic ou plusieurs voies d'acheminement de trafic ordonnées selon des priorités sont caractérisées pour chaque adresse de destination.

6. Système de communication selon la revendication 5,
**caractérisé par le fait que** le gestionnaire de système (SM), les terminaux spéciaux (DDB), les concentrateurs étendus (DDBP-B) et/ou les modules serveurs (SLMT A11 à SLMT A34 ; SLMT B11 à SLMT B14 ; SLMT C11 à SLMT C14) conviennent à la surveillance de l'état des tronçons des voies d'acheminement de trafic et à la spécification d'une voie d'acheminement de trafic qui correspond à une adresse de destination choisie et qui présente des tronçons intacts et la plus grande priorité.

7. Système de communication selon l'une des revendications 4 à 6,
**caractérisé par le fait que** des données de configuration, qui sont enregistrées dans le gestionnaire de système (SM), dans les terminaux spéciaux (DDB), dans les concentrateurs étendus (DDBP-B) et/ou dans les modules serveurs (SLMT A11 à SLMT A34 ; SLMT B11 à SLMT B14 ; SLMT C11 à SLMT C14), sont élaborées de manière spécifique à l'utilisateur et peuvent être appelées par un utilisateur, directement ou via un mot de passe, depuis n'importe quel terminal spécial (DDB) inclus dans le système de communication de telle sorte que le terminal spécial (DDB) respectivement utilisé peut être configuré avec les données individuelles propres à l'utilisateur.
